(19) Europäisches Patentamt
European Patent Office
Office européen des brevets

(11) **EP 3 874 823 B1**

(12) **EUROPEAN PATENT SPECIFICATION**

(45) Date of publication and mention
of the grant of the patent:
**15.04.2026 Bulletin 2026/16**

(21) Application number: **18930118.7**

(22) Date of filing: **02.11.2018**

(51) International Patent Classification (IPC):
*H04L 5/00* (2006.01)    *H04W 56/00* (2009.01)
*H04W 48/12* (2009.01)    *H04W 48/16* (2009.01)

(52) Cooperative Patent Classification (CPC):
**H04L 5/0048; H04W 48/16; H04W 56/0015;**
H04L 5/0094; H04W 48/12

(86) International application number:
**PCT/CN2018/113624**

(87) International publication number:
**WO 2020/034432 (20.02.2020 Gazette 2020/08)**

(54) **TIME DOMAIN MAPPING OF SYNCHRONIZATION SIGNAL BLOCKS**

ZEITBEREICHSKARTIERUNG VON SYNCHRONISATIONSSIGNALBLÖCKEN

MAPPAGE DANS LE DOMAINE TEMPOREL DE BLOCS DE SIGNAUX DE SYNCHRONISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021 Bulletin 2021/36**

(73) Proprietor: **ZTE Corporation**
**Shenzhen Guangdong 518057 (CN)**

(72) Inventors:
• **MIAO, Ting**
**Shenzhen, Guangdong 518057 (CN)**
• **BI, Feng**
**Shenzhen, Guangdong 518057 (CN)**
• **LIU, Wenhao**
**Shenzhen, Guangdong 518057 (CN)**
• **LU, Youxiong**
**Shenzhen, Guangdong 518057 (CN)**

(74) Representative: **Vossius & Partner**
**Patentanwälte Rechtsanwälte mbB**
**Siebertstraße 3**
**81675 München (DE)**

(56) References cited:
CN-A- 108 702 270    CN-A- 108 713 333
US-A1- 2011 019 622    US-A1- 2018 262 308

• **LG ELECTRONICS: "Discussions on discovery
among NR IAB nodes", vol. RAN WG1, no.
Gothenburg, Sweden; 20180820 - 20180824, 11
August 2018 (2018-08-11), XP051515891,
Retrieved from the Internet <URL:http://
www.3gpp.org/ftp/tsg%5Fran/WG1%5FRL1/
TSGR1%5F94/Docs/R1%2D1808513%2Ezip>
[retrieved on 20180811]**
• **ERICSSON: "IAB physical layer enhancement for
backhaul link management", vol. RAN WG1, no.
Gothenburg, Sweden; 20180820 - 20180824, 10
August 2018 (2018-08-10), XP051516598,
Retrieved from the Internet <URL:http://
www.3gpp.org/ftp/tsg%5Fran/WG1%5FRL1/
TSGR1%5F94/Docs/R1%2D1809231%2Ezip>
[retrieved on 20180810]**

# EP 3 874 823 B1

**Description**

This disclosure is directed generally to wireless communications.

Mobile telecommunication technologies are moving the world toward an increasingly connected and networked society. In comparison with the existing wireless networks, next generation systems and wireless communication techniques will need to support a much wider range of use-case characteristics and provide a more complex and sophisticated range of access requirements and flexibilities.

Long-Term Evolution (LTE) is a standard for wireless communication for mobile devices and data terminals developed by 3rd Generation Partnership Project (3GPP). LTE Advanced (LTE-A) is a wireless communication standard that enhances the LTE standard. The 5th generation of wireless system, known as 5G, advances the LTE and LTE-A wireless standards and is committed to supporting higher data-rates, large number of connections, ultra-low latency, high reliability and other emerging business needs.

3GPP contribution R1-1808513 discusses discovery among NR IAB nodes. 3GPP contribution R1-1809231 discusses IAB physical layer for backhaul link management. US 2018/262308 A1 discusses an NR-SS burst set design in an advanced wireless communication system.

Some example embodiments described in the present document may be used to assign transmission resources to synchronization signal blocks (SSBs) that are used for enabling discovery of integrated access and backhaul (IAB) nodes in a wireless communication network.

An exemplary wireless communication method is described to map SSBs in time domain. The method comprises determining, by a network node, time domain position of candidate synchronization signal blocks (SSBs) mapped to any one of a half-frame, a number of half-frames, and a time window associated with the half-frame, where candidate SSBs are mapped with an offset relative to the half frame start position; and transmitting, by the network node, one or more SSBs selected from the candidate SSBs to one or more network nodes.

In some embodiments, the time offset is predetermined or configured by a parent network node of the network node or an upper network node of the network node. In some embodiments, the candidate SSBs within the half frames or the time window or the number of half frames are indexed in an ascending order in time from 0 to L-1, or where the candidate SSBs within the half frames or the time window or the number of half frames are indexed in a descending order in time from L-1 to 0, where L is a maximum number of SSBs in a SSB transmission period for a frequency band. In some embodiments, the candidate SSBs are mapped to one or more sub-frames within the half-frame from an ending position of the half-frame, or a last sub-frame containing the candidate SSBs within the half-frame is the last sub-frame of the half-frame. In some embodiments, the candidate SSBs are mapped to any one of the half-frame, the number of half-frames, and the time window according to a pre-determined rule.

In some embodiments, the candidate SSBs are located in a last one or more sub-frames of each of the number of half-frames. In some embodiments, the candidate SSBs are located in a number of time segments of the number of half-frames, and a duration of each time segment is equal to an integer multiple of a slot for a subcarrier spacing. In some embodiments, the candidate SSBs are located in consecutive multiple sub-frames within a half-frame, and a number of sub-frames containing the candidate SSBs in the half-frame depends on a maximum number of SSBs in a SSB transmission period.

In some embodiments, the candidate SSBs are located in consecutive multiple half-frames, and the number of half-frames containing the candidate SSBs depends on a maximum number of SSBs in a SSB transmission period and a number of sub-frames containing the candidate SSBs in each of consecutive multiple half-frames. In some embodiments, time domain positions of the candidate SSBs in the time window is same as time domain positions of the candidate SSBs for initial access by a communication node in the first K milliseconds of a half-frame, where K is a length of the time window, and where K is less than or equal to five milliseconds.

In some embodiments, first symbol indexes for the candidate SSBs in each sub-frame or each set of slots as follows: for 15 kHz subcarrier spacing, the first symbol indexes for the candidate SSBs in each sub-frame are {2,8}; for 30 kHz subcarrier spacing, the first symbol indexes for the candidate SSBs in each sub-frame are {4,8,16,20} or {2,8,16,22}; for 120 kHz subcarrier spacing, the first symbol indexes for the candidate SSBs in each consecutive two slots aligning with one slot for subcarrier spacing 60 kHz are {4,8,16,20}; or for 240 kHz subcarrier spacing, the first symbol indexes for the candidate SSBs in each consecutive four slots aligning with one slot for subcarrier spacing 60 kHz are {8,12,16,20,32,36,40,44}. In some embodiments, the network node or a parent network node of the network node selects the one or more SSBs from the candidate SSBs for transmission.

In yet another exemplary aspect, the above-described methods are embodied in the form of processor-executable code and stored in a computer-readable program medium.

In yet another exemplary embodiment, devices that are configured or operable to perform the above-described methods are disclosed.

The above and other aspects and their implementations are described in greater detail in the drawings, the descriptions, and the claims.

BRIEF DESCRIPTION OF THE DRAWINGS

FIG. 1 shows an architecture of an Integrated Access and Backhaul (IAB) network.
FIG. 2A shows a synchronization signal block (SSB) mapping pattern corresponding to a subcarrier spacing (SCS) of 15 kHz in a half-frame.
FIGS. 2B and 2C show a SSB mapping pattern corresponding to a subcarrier spacing of 30 kHz in a half-frame.
FIG. 2D shows a SSB mapping pattern corresponding to a subcarrier spacing of 120 kHz in a half-frame.
FIG. 2E shows a SSB mapping pattern corresponding to a subcarrier spacing of 240 kHz in a half-frame.
FIG. 3A shows a SSB mapping pattern for IAB node discovery in half-frame with a subcarrier spacing of 15 kHz.
FIG. 3B shows a SSB mapping pattern for IAB node discovery in half-frame with a subcarrier spacing of 30 kHz.
FIG. 3C shows a SSB mapping pattern for IAB node discovery in half-frame with a subcarrier spacing of 120 kHz.
FIG. 3D shows a SSB mapping pattern for IAB node discovery in half-frame with a subcarrier spacing of 240 kHz.
FIG. 3E shows a SSB mapping pattern for IAB node discovery in half-frame with a subcarrier spacings of 15 kHz, 30 kHz, 120 kHz and 240 kHz.
FIG. 4A shows a SSB mapping pattern for IAB node discovery in a number of consecutive half frames with different frequency bands and subcarrier spacings of 15 kHz and 30 kHz.
FIG. 4B shows a SSB mapping pattern for IAB node discovery in a number of consecutive half frames with subcarrier spacing of 120 kHz and 240 kHz.
FIG. 4C shows a SSB mapping pattern for IAB node discovery in a number of consecutive half frames with different frequency bands and subcarrier spacings of 15 kHz and 30 kHz.
FIG. 4D shows a SSB mapping pattern for IAB node discovery in a number of consecutive half frames with subcarrier spacings of 120 kHz and 240 kHz.
FIG. 4E shows a SSB mapping pattern for IAB node discovery in a number of consecutive half frames with subcarrier spacing of 120 kHz and 240 kHz.
FIG. 5A shows a SSB mapping pattern for IAB node discovery for 15 kHz and 30 kHz subcarrier spacing in a time window.
FIG. 5B shows a SSB mapping pattern for IAB node discovery for 120 kHz subcarrier spacing in the time window.
FIG. 5C shows a SSB mapping pattern for IAB node discovery for 240 kHz subcarrier spacing in the time window.
FIG. 5D shows a SSB mapping pattern for different frequency bands and different subcarrier spacings in the time window
FIG. 6 shows an example flowchart of operations performed by a network node.
FIG. 7 shows an exemplary block diagram of a hardware platform.

DETAILED DESCRIPTION

Section headers are used in the present document only for ease of understanding and do not limit the scope of the techniques and embodiments disclosed in each section only to that section. Furthermore, while 5G networking standard is used as an example for the benefit of understanding, the disclosed techniques may be applied to embodiments that use network protocol standards other than 5G or 3GPP standards.

The exemplary techniques described in this patent document relates to the field of communication and, in particular, to a time domain mapping method of a synchronous signal block in the New Radio (NR) of the next generation communication system.

In the future wireless communication, communication will be carried out at a higher frequency than the carrier frequency used in the fourth generation (4G) communication system, such as 28 GHz, 45 GHz, 70 GHz, etc., which has a large free propagation loss. It is easily absorbed by oxygen and is greatly affected by rain attenuation, which seriously affects the coverage performance of high-frequency communication systems. However, since the carrier frequency corresponding to the high-frequency communication has a shorter wavelength, it is possible to ensure that more antenna elements can be accommodated per unit area, and more antenna elements mean that beamforming can be used to improve the antenna gain. Thereby ensuring the coverage performance of high frequency communication.

Using a beamforming method, the transmitter can concentrate the emitting energy in a certain direction, while the energy in other directions is very small, that is, each beam has its own directivity, each beam can only cover the terminal user equipment (UE) in a certain direction. The transmitter of the base station needs to emit beams in dozens of or even hundreds of directions to complete the full coverage.

In current technology, the base station sends multiple Synchronous Signal/Physical Broadcast Channel Blocks (SSBs) in a beam sweeping manner in a half-frame in a SSB transmission period. The mapping position of the SSBs in a half-frame is determined by the carrier frequency and the sub-carrier spacing used by the SSBs. In the networking deployment, the center frequency of the SSB for the initial access of the UE is located on the synchronization raster. The initial access of the UE assumes that the SSB transmission period is 20 milliseconds, and the frequency is swept on the synchronization raster to complete the downlink synchronization and select proper beams, and obtain basic information of the cell, access configuration information, and thereby access the network. Integrated access and backhaul IAB are an important research topic in NR systems.

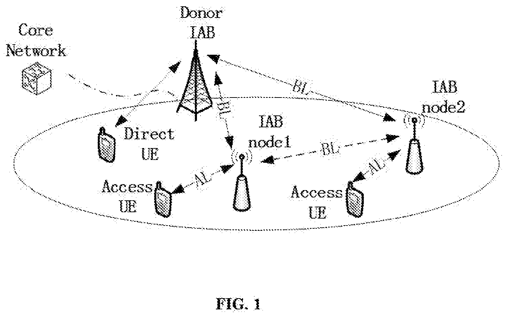

FIG. 1 shows an architecture of an Integrated Access and Backhaul (IAB) network. A node with a wired connection to the core network is called a donor IAB (hereinafter "donor IAB"), and one donor IAB can wirelessly connect with one or more IAB nodes (hereinafter "IAB nodes") and provides wireless access functions for one or more subordinate user equipment (UEs). The UEs connected to the donor IAB are called direct UEs, and the UEs connected to the IAB node are called access UEs. There is no direct link between the IAB node and the core network, and the interaction with the core network needs to be forwarded one or more times, and finally implemented by the donor IAB. The IAB node has two functions: 1) the distributed unit (DU) function, that is, the IAB node provides the radio access function for the UE like the base station; and 2) the mobile terminal (MT) function, that is, the IAB nodes are controlled and scheduled by the donor IAB or the upper IAB node like the UE.

The link between the donor IAB and the IAB nodes and the link between the IAB nodes is called a backhaul link (BL), and the link between the IAB node and the UE is called an access link (AL).

The use of wireless IAB allows for flexible and intensive deployment of NR cells, eliminating the need to lay a large number of fiber optics and saving network deployment costs. One important aspect of IAB research is the discovery of IAB nodes, which is critical to building multiple backhaul connections and improving the robustness of communications. Currently, the discovery process of IAB nodes is studied under half-duplex and multi-hop topology. The half-duplex constraint means that the IAB node cannot receive and transmit data at the same time. That is, either receive the data or send the data, but not both.

Before the activation of the IAB node Distributed Unit (DU), the IAB node is considered an MT. The IAB node discovery at this stage is called the first phase IAB node discovery (that is, the initial IAB node discovery), and the discovery process can be the same as the Release 15 procedure for cell search and initial access.

After the DU of the IAB node is activated, it has the function of the base station. The IAB node discovery at this stage is called the second phase IAB node discovery. A IAB node needs to perform mutual discovery between the IAB nodes or between donor IABs and IAB nodes and needs to provide services for the subordinate UEs. Therefore, an IAB node sends synchronization signal blocks (SSBs) to the subordinate UEs so that the subordinate UEs accesses the network, and the IAB node listens to the SSBs sent by other IAB nodes to find other IAB nodes. Due to the half-duplex constraint, an IAB node cannot simultaneously transmit the SSBs when listening to the SSBs sent by other IAB nodes, which may affect UEs the cell search and measurement. Therefore, the actually transmitted SSBs for IAB node discovery and the SSBs for UE initial access need to be orthogonal in the time domain.

If the candidate SSBs for the IAB node discovery inherits the time domain mapping pattern of the candidate SSBs for the initial access of the UE, in the standalone networking scenario, considering that the SSBs for the initial access have a transmission period of less than or equal to 20 milliseconds, SSBs are transmitted in a half frame (5 milliseconds) in the beam sweeping manner in one SSB transmission period. Therefore, the SSBs for IAB node discovery and the SSBs for initial access of the UE sent by multiple IAB nodes are difficult to achieve orthogonality in the time domain by occupying different half-frames, because there are only up to 4 half-frames in the SSBs transmission periodicity of 20 milliseconds. In particular, when the SSBs for initial access have a transmission period of 5 milliseconds, they cannot be orthogonal in time domain by occupying different half-frames. In addition, when the total number of SSBs actually transmitted in a half-frame exceeds the maximum number of SSBs in a SSB transmission periodicity for a particular band, they also cannot be orthogonal in the time domain in the half-frame. Therefore, time domain mapping of the SSB for IAB node discovery needs to be considered.

In this patent document, at least two exemplary methods are disclosed to map candidate SSBs to a half-frame or a time window: (1) a starting position of a first sub-frame containing candidate SSBs within a half-frame has a time offset $T_{offset}$ relative to a starting position of the half-frame, where a time offset can be predetermined or configured by the parent node (e.g., donor IAB) of the network node (e.g., IAB node); or (2) the candidate SSBs are mapped to any one of the half-frame, and a time window according to a pre-determined rule.

In this patent document, example methods are also described to map candidate SSBs to a number of consecutive half-frames: (1) the candidate SSBs are located in a last one sub-frame or a last two sub-frames of each of the number of half-frames; (2) the candidate SSBs are located in a number of time segments of the number of half-frames, and a duration of each time segment is equal to an integer multiple of a slot with a particular subcarrier spacing; or (3) the candidate SSBs are mapped to the number of half-frames according to a pre-determined rule.

This patent document also describes exemplary mapping method in a time window. In some embodiments, the time domain location of the candidate SSB for network node discovery in the time window of length L millisecond is the same as the time domain location of the candidate SSB for UE initial access in the first L milliseconds within the half-frame.

In the NR system, the length of a half-frame is 5 milliseconds (ms), one half-frame contains 5 subframes, and each subframe has a length of 1 ms. A synchronization signal/physical broadcast channel block (SS/PBCH block, abbreviated as SSB) is used to carry an access-related signal and/or channel such as a synchronization signal and/or a physical broadcast channel (and a corresponding demodulation reference signal DMRS). SSBs can also be used for mutual discovery between nodes, such as between IAB nodes or donor IAB and IAB nodes. The SSBs for mutual discovery between nodes and the SSBs for initial access of the UE can be the same SSB set, or the center frequency points are different and orthogonal in the time domain. In some embodiments, the synchronization signal block may include a synchronization signal and a physical broadcast channel and corresponding demodulation reference signal, or in some embodiments, the synchronization signal block may include only the synchronization signal, or in some embodiments synchronization signal block may include only the physical broadcast channel and the corresponding demodulation reference signal.

The SSB transmission resource(s) refers to a time-frequency resource(s) used for transmitting the SSBs, where an SSB has a fixed bandwidth in the frequency domain, for example, 20 physical resource blocks (PRBs), and an SSB in the time domain is composed of 4 symbols. The Primary Synchronization Signal (PSS) and the Secondary Synchronization Signal (SSS) are respectively mapped to the first and third symbols of the SSB and are mapped to the 12 PRBs in the middle of 20 PRBs. In addition to the primary and secondary synchronization signals, the SSB also includes a physical broadcast channel PBCH and a demodulation reference signal corresponding to the PBCH, which are respectively mapped on the second and fourth symbols of the SSB within bandwidth 20 PRBs, and the third symbol within remaining 8 PRBs outside the 12 PRBs used by SSS/PSS. In addition, the SSB can also only contain the synchronization signals, and the bandwidth of the SSB is 12 PRBs. For example, only the PSS and SSS synchronization signals are mapped on the first and third symbols of the SSB, respectively, or only the SSS signal is included, and the SSS signal is mapped once on the first symbol and the third symbol of the SSB, respectively.

In some embodiments, the candidate SSBs for the initial access of the UE may have different mapping patterns in the half-frame in different subcarrier spacings and different frequency bands (i.e., carrier frequencies), including:

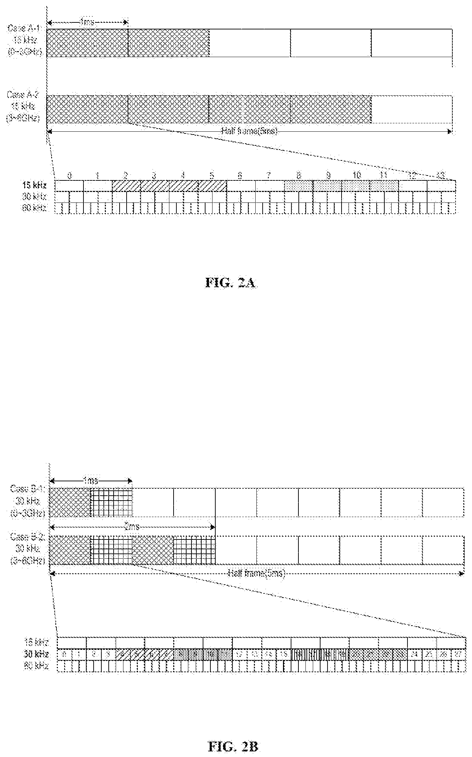

Case A: As shown in FIG. 2A, an SSB mapping pattern corresponding to a subcarrier spacing of 15 kHz, where each slot (i.e., 14 symbols with subcarrier spacing of 15 kHz) contains 2 SSBs which are mapped on symbol indexes 2 to 5 and 8 to 11, respectively.

Since the maximum number of SSBs in the SSB transmission period is different for different frequency bands, Case A can be further divided into Case A-1 and Case A-2 for different frequency bands:

Case A-1 corresponds to a frequency band less than or equal to 3 GHz, and the SSBs are mapped in the first 2 milliseconds within the half-frame (i.e., the first 2 slots);
Case A-2 corresponds to a frequency band greater than 3 GHz and less than or equal to 6 GHz, and the SSBs are mapped in the first 4 milliseconds within the half-frame (i.e., the first 4 slots).

Case B: As shown in FIG. 2B, an SSB mapping pattern corresponding to a subcarrier spacing of 30 kHz, where every two slots (i.e., 28 symbols with subcarrier spacing 30 kHz ) contain 4 SSBs, respectively mapped on symbol indexes 4 to 7, 8 to 11, 16 to 19, and 20 to 23, where index 0 corresponds to the first symbol of the first slot in 2 slots.

Similarly, since the maximum number of SSBs in the SSB transmission period is different for different frequency bands, Case B is further divided into Case B-1 and Case B-2 for different frequency bands:

Case B-1 corresponds to a frequency band less than or equal to 3 GHz, and the SSBs are mapped in the first 1 millisecond in the half-frame (i.e., the first two slots with subcarrier spacing 30 kHz);
Case B-2 corresponds to a frequency band greater than 3 GHz and less than or equal to 6 GHz, and the SSBs are mapped in the first 2 milliseconds within half-frame (i.e., the first 4 slots with subcarrier spacing 30 kHz).

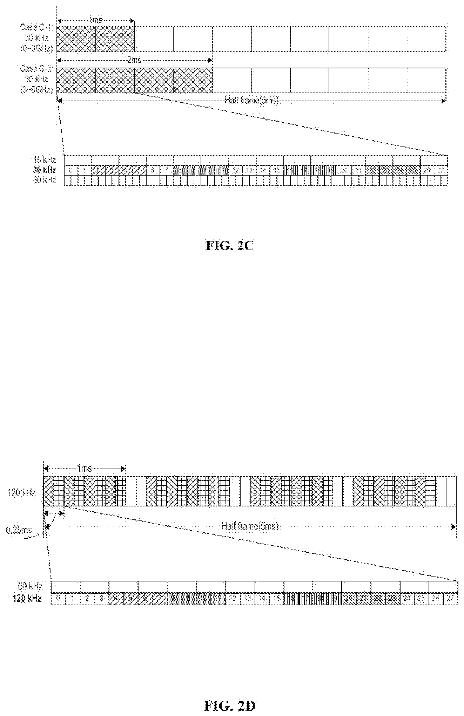

Case C: As shown in FIG. 2C, another SSB mapping pattern corresponding to a subcarrier spacing of 30 kHz in a half-frame, where every 2 slots (i.e., 28 symbols with subcarrier spacing 30 kHz) contain 4 SSBs, respectively mapped to symbol indexes 2 to 5, 8 to 11, 16 to 19, and 22 to 25, where index 0 corresponds to the first symbol of the first slot in 2 slots.

Similarly, since the maximum number of SSBs in the SSB transmission period is different for different frequency bands, Case C is further divided into Case C-1 and Case C-2 for different frequency bands:

Case C-1 corresponds to the frequency band less than or equal to 3 GHz, and the SSBs are mapped in the first 1 millisecond in the half frame (i.e., the first 2 slots with subcarrier spacing 30 kHz);
Case C-2 corresponds to a frequency band greater than 3 GHz and less than or equal to 6 GHz, and the SSBs are mapped in the first 2 milliseconds within the half-frame (i.e., the first 4 slots with subcarrier spacing 30 kHz).

Case D: As shown in FIG. 2D, an SSB mapping pattern corresponding to a subcarrier spacing of 120 kHz in a half-frame, every 2 slots (0.25 ms, that is, 28 symbols with subcarrier spacing 120 kHz) contain 4 SSBs, respectively mapped to symbol indexes 4 to 7, 8 to 11, 16 to 19, and 20 to 23, where index 0 corresponds to the first symbol of the first slot in 2 slots.

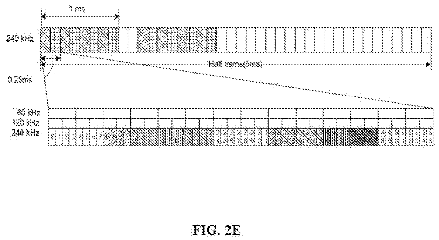

Case E: As shown in FIG. 2E, an SSB mapping pattern corresponding to a subcarrier spacing of 240 kHz in a half-frame, where every 4 slots (0.25 ms, that is, 56 symbols with subcarrier spacing 240 kHz) contain 8 SSBs, which are mapped to symbol indexes 8 to 11, 12 to 15, 16 to 19, 20 to 23, 32 to 35, 36 to 39, 40 to 43, and 44 to 47, wherein the index 0 corresponds to the first symbol of the first slot in 4 slots.

The time domain position of SSBs in mapping pattern for the candidate SSBs for UE initial access is the potential location of the SSBs transmission, and the base station (e.g., IAB node with DU function or a donor IAB node (e.g., a parent node)) can select the required number of SSB resources for the actual transmission of SSBs, that is, the number of the candidate SSB resources is the maximum number of SSB actually transmitted in a SSB transmission periodicity. Some or all of these SSB resources can be selected to actually transmit SSBs.

In addition, the transmission period of the SSBs for UE initial access includes the following values: 5 ms, 10 ms, 20 ms, 40 ms, 80 ms, and 160 ms. For the carrier that supports the UE initial access, a UE may assume that half frames with SSBs occur with a periodicity of 2 frames (i.e. 20 ms). Therefore, the actual transmission period of the SSBs can only be less than or equal to 20 ms, for example, 5 ms, 10 ms, and 20 ms. When the SSB transmission period is 20ms, the 5ms time window containing the SSBs can be configured for any 5ms half frame within the 20ms transmission period. For example, in 20 ms (i.e., two adjacent radio frames), 4 half frames are included, and the SSBs are configured in the first half frame. At this point, the SSBs are also transmitted in the first half-frame in other transmission periodicity. Similarly, the SSBs can also be configured in half frame with the same position in each transmission periodicity. When the SSB transmission period is 10 ms, the 5 ms time window containing the SSBs can be configured in an odd half frame or an even half frame in a transmission period. When the SSB transmission period is 5 ms, each half frame contains the SSBs.

A network node refers to any one of an IAB node, a donor IAB, a relay node, a base station, a terminal, a workstation, and the like. In the following embodiments and examples, the network node takes an IAB node as an example.

## Embodiment 1: Candidate SSBs are mapped to a half frame for IAB node discovery

This embodiment provides a mapping pattern of candidate SSBs for IAB node discovery within a half frame (i.e., half of a radio frame and a length of 5ms). In this embodiment, candidate SSBs are mapped to one sub-frame or consecutive multiple sub-frames within a half-frame.

In some embodiments, the first subframe containing the candidate SSBs for node discovery has a time offset $T_{offset}$ milliseconds relative to a starting position of the half-frame, that is, the first subframe containing the candidate SSBs is delayed by $T_{offset}$ milliseconds relative to a starting position of the half-frame. For different subcarrier spacings and different frequency bands, the value of $T_{offset}$ may be different. For example, when the subcarrier spacing of the SSBs for node discovery is 15 kHz, $T_{offset}$ may equal 2 ms or 3 ms for carrier frequencies smaller than or equal to 3 GHz; $T_{offset}$ may equal 0 or 1 ms for carrier frequencies larger than 3 GHz and smaller than or equal to the 6 GHz. For different subcarrier spacings and different frequency bands, a $T_{offset}$ value may be pre-determined, or the value of $T_{offset}$ may be determined according to the time domain position of transmitted SSBs for UE initial access. $T_{offset}$ value should make the number of overlapping SSBs as small as possible between SSBs for IAB node discovery and SSBs for UE initial access.

In some embodiments, $T_{offset}$ may equal 0, that is, the mapping pattern in a half frame for candidate SSBs for IAB node discovery and candidate SSBs for UE initial access are same.

In some embodiments, the candidate SSBs are mapped to one or more sub-frames within the half-frame from an ending position of the half-frame, or a last sub-frame containing the candidate SSBs within the half-frame is the last sub-frame of the half-frame. In other words, the candidate SSBs are mapped to last one sub-frame or consecutive multiple sub-frames within a half-frame.

For a specific subcarrier spacing, the number of sub-frames or slots containing candidate SSBs for IAB node discovery within a half frame may depend on the maximum number of SSB in SSB transmission period for a particular band.

In this embodiment, the maximum number of SSBs in the candidate SSB transmission period for IAB node discovery for a particular bands may be assumed to be: the maximum number can be L=4 for carrier frequencies smaller than or equal to 3 GHz, and the maximum number can be L=8 for carrier frequencies larger than 3 GHz and smaller than or equal to 6 GHz, the maximum number can be L=64 for carrier frequencies larger than 6 GHz. If the maximum number of SSBs for a particular bands specified by the protocol increases, it may be necessary to increase the number of subframes or slots containing candidate SSBs for IAB node discovery in a half frame; if the maximum number of SSBs for a particular bands specified by the protocol is reduced, it is possible to correspondingly reduce the number of subframes or slots containing candidate SSBs for IAB node discovery.

If the candidate SSBs for the IAB node discovery and candidate SSBs for UE initial access overlap in time domain, then occupied candidate SSBs resources by SSBs for UE initial access cannot be used for transmitting SSBs for IAB node discovery, that is, the SSBs for the initial access of the UE and the SSBs for the IAB node discovery use overlapping candidate SSBs resources in a time division multiplexing (TDM) manner, and the SSBs transmission for initial access of the UE has a higher priority.

Example 1 for Embodiment 1: SSBs with 15 kHz subcarrier spacing

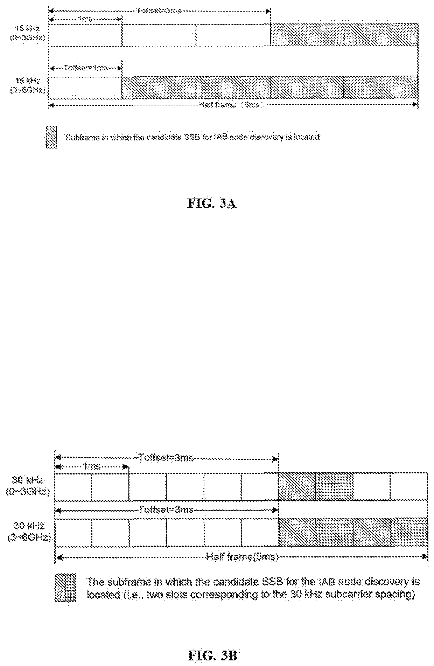

For different frequency bands, FIG. 3A shows a mapping pattern of candidate SSBs for IAB node discovery in half-frame with a subcarrier spacing of 15 kHz. For carrier frequencies smaller than or equal to 3 GHz, the candidate SSBs for IAB node discovery are on the last 2 sub-frames in a half frame; and for carrier frequencies larger than 3 GHz and smaller than or equal to the 6 GHz, the candidate SSBs for IAB node discovery are on the last 4 sub-frames within half frame. Because a sub-frame contains 2 SSBs for 15 kHz subcarrier spacings, 4 SSBs can be mapped in half frame using this mapping pattern for carrier frequencies smaller than or equal to 3 GHz; and 8 SSBs can be mapped in half frame using this mapping pattern for carrier frequencies larger than 3 GHz and smaller than or equal to the 6 GHz. To map more SSB within half a frame, the value of $T_{offset}$ may be reduced.

The candidate SSBs for IAB node discovery may also be mapped to other consecutive subframes or non-contiguous subframes in a half frame. For example, candidate SSBs can be mapped on the 3rd and 4th subframes or any two subframes or any multiple subframes in the half frame for carrier frequencies smaller than or equal to 3 GHz. Similarly, for carrier frequencies larger than 3 GHz and smaller than or equal to the 6 GHz, candidate SSBs can be mapped on any 4 subframes, or less than 4 subframes, or all subframes within a half frame. The number of subframes that need to be mapped in a half frame for candidate SSBs for IAB node discovery may depend on the maximum number of SSBs in the SSB transmission period for a particular band.

For the 15 kHz subcarrier spacing, the candidate SSBs for IAB node discovery can have the same mapping pattern within each sub-frame as the candidate SSBs for UE initial access using the same subcarrier spacing, that is, 2 SSBs within a sub-frame for the subcarrier spacing 15 kHz are mapped in symbol indexes 2 to 5 and 8 to 11, respectively. For 15 kHz subcarrier spacing, time domain location of candidate SSBs for IAB node discovery within a subframe may also be redesigned, for example, 2 SSBs within a sub-frame can be mapped respectively on symbol indexes 4 to 7 and 8 to 11 within a sub-frame.

Example 2 for Embodiment 1: SSBs with 30 kHz subcarrier spacing

For different frequency bands, FIG. 3B shows a mapping pattern of candidate SSBs for IAB node discovery for subcarrier spacing of 30 kHz in a half frame. For carrier frequencies smaller than or equal to 3 GHz, the candidate SSBs for IAB node discovery are on the second last subframe in the half frame; and for carrier frequencies larger than 3 GHz and smaller than or equal to the 6 GHz, the candidate SSBs for IAB node discovery are the last two sub-frames in the half frame. Since one subframe contains four SSBs with 30 kHz subcarrier spacing, 4 SSBs can be mapped in half frame using this mapping pattern for carrier frequencies smaller than or equal to 3 GHz; and 8 SSBs can be mapped in half frame using this mapping pattern for carrier frequencies larger than 3 GHz and smaller than or equal to the 6 GHz. To map more SSBs the value of $T_{offset}$ may be reduced.

For a 30 kHz subcarrier spacing, candidate SSBs for IAB node discovery may also be mapped to other consecutive subframes or non-contiguous subframes or slots with 30 kHz subcarrier spacing in a half frame. The network may predetermine the subframes or slots with 30 kHz subcarrier spacing containing candidate SSBs for IAB node discovery in a half frame. For example, for carrier frequencies smaller than or equal to 3 GHz candidate SSBs can be mapped on the last subframe or any 2 slots with 30 kHz subcarrier spacing in the half frame, or mapped on any one subframe or any multiple subframes in the half frame. Similarly, for carrier frequencies larger than 3 GHz and smaller than or equal to the 6 GHz, candidate SSBs for IAB node discovery may also be mapped to non-contiguous subframes or slots with 30 kHz subcarrier spacing in a half frame, such as any 2 or multiple subframes in half frame, or any 4 or multiple slots with 30 kHz subcarrier spacing in a half frame. When candidate SSBs are mapped on multiple non-contiguous slots with 30 kHz subcarrier spacing, each slot (i.e., 14 symbols with subcarrier spacing of 30 kHz) contains 2 SSBs which are mapped on symbol indexes 2 to 5 and 8 to 11, respectively. The number of subframes that need to be mapped in a half frame for candidate SSBs for IAB node discovery may depend on the maximum number of SSBs in the SSB transmission period for a particular band.

Example 3 of Embodiment 1: SSBs with 120 kHz subcarrier spacing

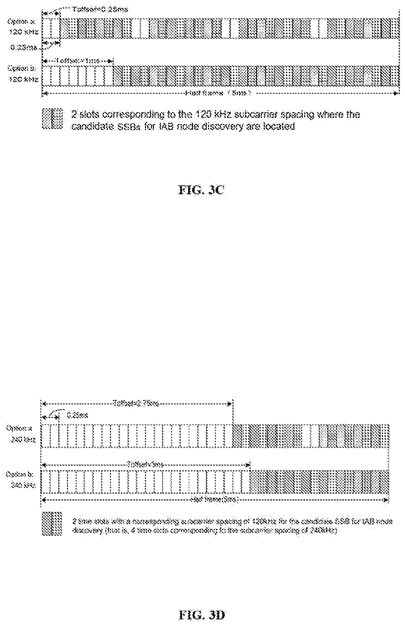

FIG. 3C shows a mapping pattern of candidate SSBs for IAB node discovery for subcarrier spacing of 120 kHz in a half frame. For option a, the time domain position of the candidate SSBs for IAB node discovery in the half frame has 0.25 ms offset relative to the time position of candidate SSBs for the initial access of the UE using the same subcarrier spacing. For option b, candidate SSB for IAB node discovery in the half frame are mapped on the last 4 consecutive subframes in the half frame, i.e. the first subframe containing candidate SSBs has a time offset 1 ms relative to the starting position of half frame. The protocol can specify two options, one is configured in actual use, or the protocol only specifies one of them. In order to avoid long-term blocking of data transmission caused by the transmission of the SSBs for IAB node discovery, option a is preferred. Because for the SSBs with 120 kHz subcarrier spacing, the candidate SSBs for IAB node discovery in options a and b are mapped in 32 slots with 120 kHz subcarrier spacing, and one slot contains 2 SSBs, so for carrier frequencies larger than 6 GHz, 64 candidate SSBs can be mapped in a half frame using this mapping pattern. To map more SSBs the value of $T_{offset}$ may be reduced.

For 120 kHz subcarrier spacing, candidate SSBs for IAB node discovery may also be mapped to non-contiguous slots with 60 kHz subcarrier spacing (i.e. the length of a slot is 0.25 ms, or 2 slots for 120 kHz subcarrier spacing and the length of each slot is 0.125 ms) in a half frame. The network may predetermine the slots containing candidate SSBs for IAB node discovery in a half frame. For example, for carrier frequencies larger than 6 GHz candidate SSBs can be mapped to any 16 slots with 60 kHz subcarrier spacing within a half frame, or to any 32 slots with 120 kHz subcarrier spacing, or multiple slots with 60 kHz subcarrier spacing, or multiple slots with 120 kHz subcarrier spacing. The number of slots with 60 kHz or 120 kHz subcarrier spacing that need to be mapped in a half frame for candidate SSBs for IAB node discovery may depend on the maximum number of SSBs in the SSB transmission period for a particular band.

In the mapping pattern shown in FIG. 3C, the time domain position of candidate SSBs for IAB nodes discovery in the slot with 60kHz subcarrier spacing (i.e. 0.25ms) is the same as the time domain of candidate SSBs in mapping pattern Case D above in the slot with 60kHz subcarrier spacing. The position of candidate SSBs for IAB node discovery in the slot with 120 kHz subcarrier spacing can also be redesigned. For example, a slot with 120 kHz subcarrier spacing includes two SSBs, which are respectively mapped in symbols indexes 2 to 5, and 8 to 11, other mapping methods are not excluded.

Example 4 of Embodiment 1: SSBs with 240 kHz subcarrier spacing

FIG. 3D shows a mapping pattern of candidate SSBs for IAB node discovery in a half frame with a subcarrier spacing of 240 kHz. For option a, the time domain position of the candidate SSB for IAB node discovery in the half frame has 2.75 ms offset relative to the time domain position of candidate SSBs for the initial access of the UE with the same subcarrier spacing. For option b, candidate SSBs for IAB node discovery in the half frame are mapped on the last 2 consecutive subframes in the half frame, i.e. the first subframe containing candidate SSBs has a time offset 3 ms relative to the starting position of half frame. The protocol can specify two options, one is configured in actual use, or the protocol only specifies one of them. In order to avoid long-term blocking of data transmission caused by transmitting the SSBs for IAB node discovery, option a is preferred. Because for the SSB with 240 kHz subcarrier spacing, the candidate SSBs for IAB node discovery in both options a and b are mapped in 32 slots with 240 kHz subcarrier spacing in a half frame, and for carrier frequencies larger than 6 GHz, 64 candidate SSBs can be mapped in a half frame using this mapping pattern. To map more SSBs the value of $T_{offset}$ may be reduced.

For 240 kHz subcarrier spacing, candidate SSBs for IAB node discovery may also be mapped to non-contiguous subframes or slots with 60 kHz subcarrier spacing (i.e. the length of slot is 0.25 ms) or slots with 120 kHz subcarrier spacing in a half frame. The network may predetermine the subframes or slots containing candidate SSBs for IAB node discovery in a half frame. For example, for carrier frequencies larger than 6 GHz candidate SSBs can be mapped to any 8 slots with 60 kHz subcarrier spacing within a half frame, or to any 16 slots with 120 kHz subcarrier spacing, or multiple slots with 60 kHz subcarrier spacing, or on multiple slots with 120 kHz subcarrier spacing. The number of slots with 60 kHz sub-carrier spacing or the number of slots with 120 kHz sub-carrier spacing required to be mapped in a half-frame may depend on the maximum number of SSBs in the SSB transmission period for a particular band.

In the mapping pattern shown in FIG. 3D, the mapping pattern in the slot with 60kHz subcarrier spacing (i.e. 0.25ms) for candidate SSBs for IAB node discovery is the same as mapping pattern Case E above in the slot with 60kHz subcarrier spacing. The position of the SSBs in the slot with 240 kHz subcarrier spacing can also be redesigned. For example, a slot with 240 kHz subcarrier spacing includes two SSBs, which are respectively mapped in symbol indexes 2 to 5, and 8 to 11, other mapping methods are not excluded.

Example 5 of Embodiment 1: SSBs with 15 kHz, 30 kHz, 120 kHz and 240 kHz subcarrier spacings

In this example, the candidate SSBs are mapped to one or more sub-frames within the half-frame from the ending position of the half-frame, or the last sub-frame containing the candidate SSBs within the half-frame is the last sub-frame of the half-frame. In other words, the candidate SSBs are mapped to last one sub-frame or consecutive multiple sub-frames within a half-frame.

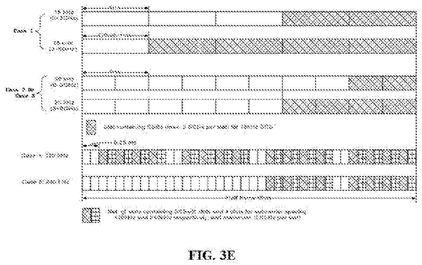

FIG. 3E shows a mapping pattern of candidate SSBs for IAB node discovery in a half frame with a subcarrier spacings of 15 kHz, 30 kHz, 120 kHz, 240 kHz. This figure only indicates subframes or slots containing candidate SSBs within half-frame.

For a half frame with SSBs, the first symbol indexes for candidate SSBs are determined according to the subcarrier spacing of SSBs as follows, where index 0 corresponds to the first symbol of the first slot in a half-frame.

Case 1 - For 15 kHz subcarrier spacing and carrier frequencies smaller than or equal to 3 GHz, the first symbols of the candidate SSBs have indexes 42 + {2,8} + 14$n$, or {44,50} + 14$n$, where $n$ = 0,1; For 15 kHz subcarrier spacing and carrier frequencies larger than 3 GHz and smaller than or equal to 6 GHz, the first symbols of the candidate SSBs have indexes 14 + {2,8} + 14$n$ ,or {16,22} + 14$n$ , where $n$ = 0,1,2,3.

Case 2 - For 30 kHz subcarrier spacing and carrier frequencies smaller than or equal to 3 GHz, the first symbols of the candidate SSBs have indexes 112 + {4,8,16,20,}, or {116,120,128,132} ; For 30 kHz subcarrier spacing and carrier frequencies larger than 3 GHz and smaller than or equal to 6 GHz, the first symbols of the candidate SSBs have indexes 84 + {4,8,16,20} + 28$n$ ,or {88,92,100,104} + 28$n$ , where $n$ = 0,1.

Case 3 - For 30 kHz subcarrier spacing and carrier frequencies smaller than or equal to 3 GHz, the first symbols of the candidate SSBs have indexes 112 + {2,8} + 14$n$, or {114,120} + 14$n$, where $n$ = 0,1; For 30 kHz subcarrier spacing and carrier frequencies larger than 3 GHz and smaller than or equal to 6 GHz, the first symbols of the candidate SSBs have indexes 84+{2,8} + 14$n$ ,or {86,92} + 14$n$ , where $n$ = 0,1,2,3.

Case 4 - For 120 kHz subcarrier spacing and carrier frequencies larger than 6 GHz, the first symbols of the candidate SSBs have indexes 28 + {4,8,16,20} + 28$n$ , or {32,36,44,48} + 28$n$, where $n$ = 0,1,2,3,5,6,7,8,10,11,12,13,15,16,17,18.

Case 5 - For 240 kHz subcarrier spacing and carrier frequencies larger than 6 GHz, the first symbols of the candidate SSBs have indexes 616 + {8,12,16,20,32,36,40,44} + 56$n$ , or {624,628,632,636,648,652,656,660} + 56$n$ , where $n$ = 0,1,2,3,5,6,7,8.

**Embodiment 2: Candidate SSBs are mapped in N consecutive half frames for IAB node discovery**

In this embodiment, the mapping pattern of candidate SSB for IAB node discovery in N consecutive half frames is given.

The candidate SSBs for IAB node discovery are mapped within N consecutive half frames, where N is a positive integer. The candidate SSBs for IAB node discovery can be mapped within the last one or more sub-frames of each half frame in the N continuous half frames. In some embodiments, the candidate SSBs for the discovery of the IAB node can be mapped within the last one sub-frames of each half frame in the N continuous half frames. In some embodiments, the candidate SSBs for IAB node discovery are mapped in the last two subframes of each of the N consecutive half frames.

For a frequency larger than the 6 GHz band, the candidate SSBs for the discovery of the IAB node can be mapped in the K time periods (i.e., time segments) in the N consecutive half frames, and K is a positive integer and indicates the number of time periods containing candidate SSBs in the N consecutive half frames. The length of each time period can be equal to a slot with 60 kHz subcarrier spacing. For different frequency bands and given subcarrier spacing, the value of N may depend on the maximum number of SSBs in SSB transmission periodicity for a particular band, and the values for different bands and different subcarrier spacings can be different. The value of N can be predefined in the protocol.

In Embodiment 2, the maximum number of SSBs in the SSB transmission period for IAB node discovery for a particular bands may be assumed to be: the maximum number is L=4 for carrier frequencies smaller than or equal to 3 GHz, and the maximum number is L=8 for carrier frequencies larger than 3 GHz and smaller than or equal to 6 GHz, the maximum number is L=64 for carrier frequencies larger than 6 GHz. If the maximum number of SSBs for particular bands specified by the protocol is other value, the corresponding change in the value of N may be required for different subcarrier spacings.

Example 1 of Embodiment 2: Mapping within the last subframe of each of the N consecutive half frames

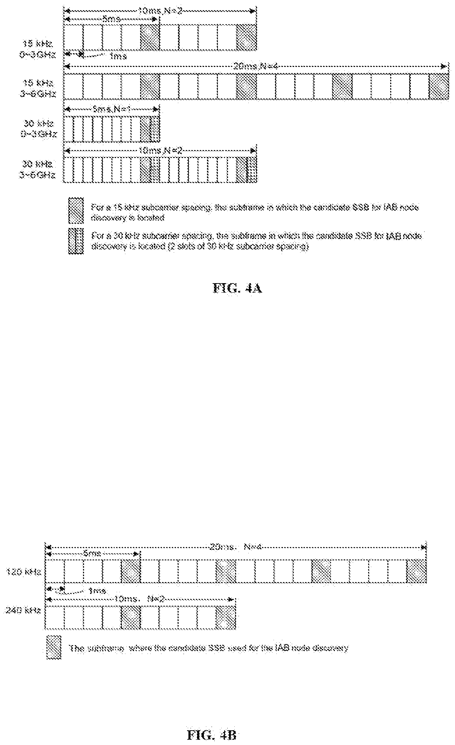

FIG. 4A shows a mapping pattern of candidate SSBs for IAB node discovery in N consecutive half frames with different frequency bands and sub-carrier spacings of 15 kHz and 30k Hz.

For the frequency band less than or equal to 3 GHz, the candidate SSBs for IAB node discovery with the subcarrier spacing of 15 kHz are mapped in the last subframe of each of the two consecutive half frames; For the frequency band greater than 3 GHz and less than or equal to 6 GHz, the candidate SSBs for the IAB node discovery with the subcarrier spacing 15 kHz are mapped within the last subframe of each of the 4 consecutive half frames.

For carrier frequencies smaller than or equal to 3 GHz, the candidate SSBs for IAB node discovery with the subcarrier spacing of 30 kHz are mapped in the last subframe within a half frame; For the frequency band greater than 3 GHz and less than or equal to 6 GHz, the candidate SSBs for the IAB node discovery with the subcarrier spacing 30 kHz are mapped within the last subframe of each of the 2 consecutive half frames.

FIG. 4B shows a mapping pattern of candidate SSBs for IAB node discovery in N consecutive half frames with different frequency bands and sub-carrier spacings of 120 kHz and 240 kHz. For carrier frequencies larger than 6 GHz, the candidate SSBs for IAB node discovery with the subcarrier spacing of 120 kHz are mapped in the last subframe of each of the 4 consecutive half frames; For carrier frequencies larger than 6 GHz, the candidate SSBs for IAB node discovery with the subcarrier spacing of 240 kHz are mapped in the last subframe of each of the 2 consecutive half frames.

Example 2 of Embodiment 2: Mapping within the last 2 subframes of each of the N consecutive half frames

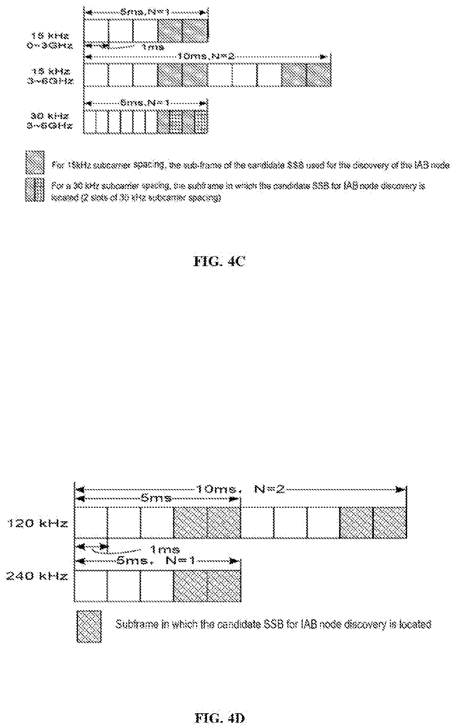

FIG. 4C shows a mapping pattern of candidate SSB for IAB node discovery in N consecutive half frames with different frequency bands and sub-carrier spacings of 15 kHz and 30 kHz. For the frequency band less than or equal to 3 GHz, the candidate SSBs for IAB node discovery with 15 kHz subcarrier spacing are mapped in the last 2 subframes within one half frame; for the frequency band greater than 3 GHz and less than or equal to 6 GHz, the candidate SSBs for IAB node discovery with 15 kHz subcarrier spacing are mapped in the last 2 subframes of each of the 2 consecutive half frames.

For the frequency band less than or equal to 3 GHz, the candidate SSBs for IAB node discovery with 30 kHz subcarrier spacing are mapped in the last 2 subframes within one half frame.

Since the maximum number of SSBs in the SSB transmission period for carrier frequencies smaller than or equal to 3 GHz is L=4, the candidate SSBs for IAB node discovery of the subcarrier spacing with 30 kHz are mapped on one subframe in the half frame. That is, because one subframe contains four SSBs with subcarrier spacing of 30 kHz.

FIG. 4D shows a mapping pattern of candidate SSB for IAB node discovery with sub-carrier spacings of 120 kHz and 240 kHz in N consecutive half frames.

For carrier frequencies larger than 6 GHz, the candidate SSBs for IAB node discovery with subcarrier spacing of 120 kHz are mapped within the last 2 subframes of each of the 2 consecutive half frames.

For carrier frequencies larger than 6 GHz, the candidate SSBs for IAB node discovery with subcarrier spacing of 240 kHz are mapped within the last 2 subframes within one half frame.

Example 3 of Embodiment 2: Mapping in the k time period in N consecutive half frames

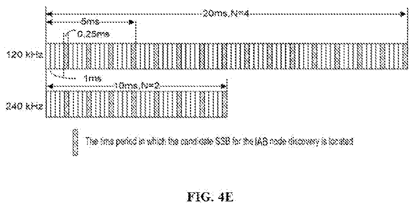

FIG. 4E shows a mapping pattern of candidate SSBs for IAB node discovery with carrier spacings of 120 kHz and 240 kHz in N consecutive half frames.

For the frequency band greater than 6 GHz, the candidate SSBs for IAB node discovery with the subcarrier spacing of 120 kHz are mapped within 4 slots with subcarrier spacing 60 kHz (the length of each slot is 0.25 ms) of each of the 4 consecutive half frames, and 0.25 ms corresponds to 2 slots with the 120 kHz subcarrier spacing, and each slot contains 2 candidate SSBs. The mapping pattern of the candidate SSBs for IAB node discovery within 0.25 ms is the same as the mapping pattern of the candidate SSB for the initial access of the UE in the first 0.25 ms within a half frame given by Case D.

For the frequency band greater than 6 GHz, the candidate SSBs for IAB node discovery with the subcarrier spacing of 240 kHz are mapped within 4 slots with subcarrier spacing 60 kHz (the length of each slot is 0.25 ms) of each of the 2 consecutive half frames, and 0.25 ms corresponds to 4 slots with the 240 kHz subcarrier spacing. The mapping pattern of the candidate SSBs for IAB node discovery within 0.25 ms is the same as the mapping pattern of the candidate SSB for the initial access of the UE in the first 0.25 ms within a half frame given by Case E.

**Embodiment 3: Mapping of candidate SSBs for IAB node discovery in a half frame on a time resource that is not mapped by a candidate SSB for initial access of the UE**

The candidate SSBs for IAB node discovery and candidate SSBs for UE initial access are multiplexed in half-frame.

Preferably, for any one of the following mapping patterns for the candidate SSBs for initial access of the UE: Case A, Case B, Case C, Case E, candidate SSBs for IAB node discovery are mapped in subframes which are not mapped by candidate SSBs for UE initial access in a half frame.

Preferably, the candidate SSBs are mapped to any one of the half-frame according to a pre-determined rule, e.g. mapping table, or relationship with mapping pattern of candidate SSBs for UE initial access.

In this embodiment, the maximum number of SSBs in the candidate SSB transmission period for IAB node discovery for a particular bands may be assumed to be: the maximum number is L=4 for carrier frequencies smaller than or equal to 3 GHz, and the maximum number is L=8 for carrier frequencies larger than 3 GHz and smaller than or equal to 6 GHz, the maximum number is L=64 for carrier frequencies larger than 6 GHz.

Example 1 of Embodiment 3:

The mapping pattern for the candidate SSBs for UE initial access in half-frame is as follows:

Case A-1 corresponds to SSBs for less than or equal to the 3 GHz band and 15 kHz subcarrier spacing, and the SSBs are mapped on the first two subframes in the half frame;
Case A-2 corresponds to SSBs for greater than 3 GHz and less than or equal to the 6 GHz band and 15 kHz subcarrier spacing, and the SSBs are mapped on the first 4 subframes in the half frame;

Case B-1 or Case C-1 corresponds to SSBs for less than or equal to the 3 GHz band and 30 kHz subcarrier spacing, and the SSBs are mapped on the first subframe in the half frame;

Case B-2 or Case C-2 corresponds to SSBs for greater than 3 GHz and less than or equal to the 6 GHz band and 30 kHz subcarrier spacing, and the SSBs are mapped on the first two subframes within the half frame;

Case D corresponds to SSBs for greater than the 6 GHz band and 120 kHz subcarrier spacing, and the SSBs are mapped on each subframe within the half frame;

Case E corresponds to SSBs for greater than the 6 GHz band and 240 kHz subcarrier spacing, and the SSBs are mapped on the first 3 subframes within the half frame.

For Case D, the candidate SSBs for initial access of the UE are mapped on each subframe within the half frame, so Case D cannot implement completely orthogonal between the candidate SSBs for initial access of the UE and the candidate SSBs for IAB node discovery in time domain in the half frame, but the candidate SSBs for IAB node discovery and the candidate SSBs for UE initial access may be orthogonal in the time domain in N consecutive half frames. The previous embodiment has given some methods.

With the exception of Case D, other cases have at least one subframe that do not mapped by candidate SSBs for UE initial access. Therefore, candidate SSBs for IAB node discovery can be mapped in these subframes that do not mapped by candidate SSBs for UE initial access. Possible mapping patterns are shown in table 1, where the last column of each row represents a mapping pattern (i.e. subframe indexes containing SSBs) within half frame for a different subcarrier spacing and frequency bands.

The mapping pattern specified by the protocol may be part of the mapping pattern in the table, or the mapping pattern in the table may be part of the mapping pattern specified by the protocol

Table 1

| Index | Subcarrier spacing used by candidate SSBs for IAB node discovery | Frequency bands corresponding to candidate SSBs for IAB node discovery (*) | The subframe indexes of the candidate SSBs for IAB node discovery mapped in the half frame (index 0 corresponds to the first subframe in half frame) |
|---|---|---|---|
| 0 | 15 kHz | Band 1 | 1，2 |
| 1 | 15 kHz | Band 1 | 2，3 |
| 2 | 15 kHz | Band 1 | 3，4 |
| 3 | 30 kHz | Band 1 | 1 |
| 4 | 30 kHz | Band 1 | 2 |
| 5 | 30 kHz | Band 1 | 3 |
| 6 | 30 kHz | Band 1 | 4 |
| 7 | 30 kHz | Band 2 | 1，2 |
| 8 | 30 kHz | Band 2 | 2，3 |
| 9 | 30 kHz | Band 2 | 3，4 |
| 10 | 240 kHz | Band 3 | 3，4 |

Note *:

Frequency Band 1: Less than or equal to the 3 GHz band;

Frequency Band 2: greater than 3 GHz and less than or equal to 6 GHz band;

Frequency Band 3: Greater than 6 GHz band

**Embodiment 4: Mapping candidate SSBs for IAB node discovery within a time window**

For the length of K milliseconds of the time window, the time domain position of candidate SSBs in the time window is the same as time domain position of candidate SSBs for user equipment initial access in the first K milliseconds of a half-frame, where K is smaller than or equal to five milliseconds.

In this embodiment, the maximum number of SSBs in the candidate SSB transmission period for IAB node discovery for a particular bands may be assumed to be: the maximum number is L=4 for carrier frequencies smaller than or equal to 3 GHz, and the maximum number is L=8 for carrier frequencies larger than 3 GHz and smaller than or equal to 6 GHz, the maximum number is L=64 for carrier frequencies larger than 6 GHz.

Example 1 of Embodiment 4: For different frequency bands and different sub-carrier spacings, time window length may be different.

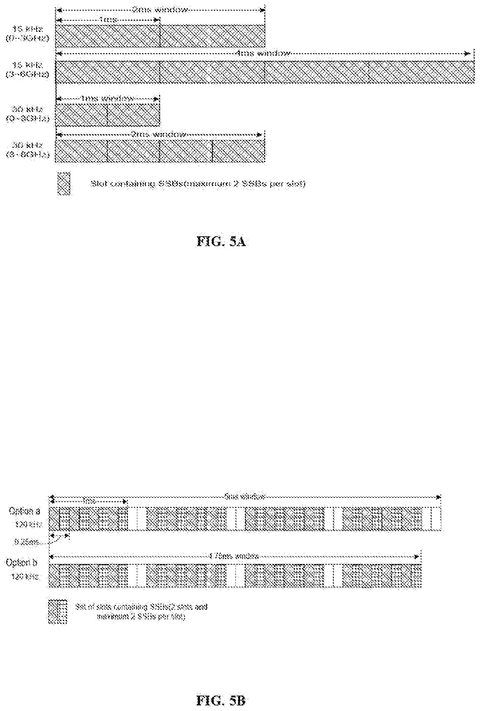

FIG. 5A shows the mapping pattern of candidate SSBs for IAB node discovery for 15 kHz and 30 kHz subcarrier spacing in the time window.

FIG. 5B shows the mapping pattern of candidate SSBs for IAB node discovery for 120 kHz subcarrier spacing in the time window. For option a, the mapping pattern (i.e. time domain location in 5 ms time window) of candidate SSBs for IAB node discovery is the same as the case D corresponding to mapping pattern of candidate SSBs for UE initial access in half a frame. Considering that the last 0.25ms of option a does not contain SSBs, the length of the time window can be shortened to 4.75ms, that is, option b. Measurement windows of option b is smaller than option a, which is benefit to save measurement power consumption.

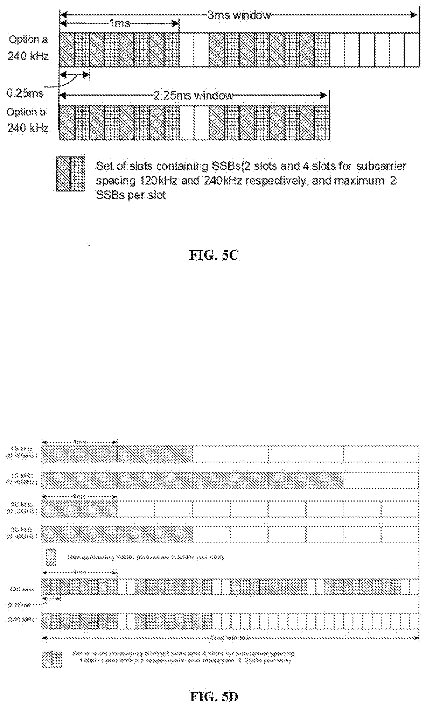

FIG. 5C shows the mapping pattern of candidate SSBs for IAB node discovery for 240 kHz subcarrier spacing in the time window. For option a, time domain position of candidate SSBs in the time window is the same as time domain position of candidate SSB for user equipment initial access (i.e. Case E) in the first 3 milliseconds of a half-frame. Considering that the last 0.75 ms of option a does not contain SSBs, the length of the time window can be shortened to 2.25 ms, that is, option b. Measurement windows of option b is smaller than option a, which is benefit to save measurement power consumption.

Example 2 of Embodiment 4: The time window length is fixed to 5 ms

FIG. 5D shows a SSB mapping pattern for different frequency bands and different sub-carrier spacings in the time window. That is, for a specific frequency band and a specific subcarrier spacing, mapping pattern of the candidate SSB for IAB node discovery in the time window is the same as the mapping pattern of the candidate SSB for UE initial access in the half frame.
It is worth noting that:

(1) In each of the above embodiments and examples, the first symbol indexes for candidate SSBs for IAB node discovery in each sub-frame or each set of slots as follows:

for 15 kHz subcarrier spacing, the first symbol indexes for candidate SSBs in each sub-frame are {2,8};
for 30 kHz subcarrier spacing, the first symbol indexes for candidate SSBs in each sub-frame are {4,8,16,20} or {2,8,16,22};
for 120 kHz subcarrier spacing, the first symbol indexes for candidate SSBs in each consecutive two slots (i.e. 0.25 ms because the length of each slot is 0.125 ms for subcarrier spacing 120 kHz) aligning with one slot for subcarrier spacing 60 kHz are {4,8,16,20};
for 240 kHz subcarrier spacing, the first symbol indexes for candidate SSBs in each consecutive four slots (i.e. 0.25 ms because the length of each slot is 0.0625 ms for subcarrier spacing 240 kHz) aligning with one slot for subcarrier spacing 60 kHz are {8,12,16,20,32,36,40,44}.

It is also possible to redesign the mapping pattern of candidate SSBs for IAB node discovery in a sub-frame or in a slot or a set of slots with different sub-carrier spacings.
(2) In each of the above embodiments and examples, the time domain position of SSBs in mapping pattern for the candidate SSBs is the potential location of the SSBs transmission, and a IAB node can select the required number of SSB resources for the actual transmission of SSB, that is, the number of the candidate SSB resources is the maximum number of SSB actually transmitted in a SSB transmission periodicity. Some or all of these SSB resources can be selected to actually transmit SSBs.

For the SSB transmission period for IAB node discovery, the protocol may predefine one or more values, for example, the transmission period is a power of 2 times of the radio frame, that is, the following values are 5 ms, 10 ms, 20 ms, 40 ms, 80 ms, 160ms, 320ms, 640ms, 1280 ms or greater; or, the transmission period is an integer multiple or a power of 2 times of the length of N consecutive half-frames (abbreviated as half-frame set), or an integer multiple or a power of 2 times of the time window. In a SSBs transmission period, the actually transmitted SSB may be mapped in any one of a half-frame, a half-frame set, or a time window in the transmission periods according to the mapping pattern of the candidate SSB for the IAB node discovery described above. If the transmission period includes M half-frame sets, the SSB can be configured in any one of the M half-frame sets in the transmission period. However, the time domain position of candidate SSBs for IAB node discovery must be the same in all transmission period.
For different frequency bands and different sub-carrier spacings, mapping pattern of candidate SSBs for IAB node discovery can be predefined in the protocol, or can be dynamically configured. For a frequency band and a subcarrier spacing, one or more mapping patterns of candidate SSBs for IAB node discovery can be pre-defined or configured.
The upper node of the IAB node may send configuration information to the IAB node for mutual discovery between the IAB nodes or donor IAB and IAB nodes, and the configuration information includes at least one of the following: a sending configuration of the SSB, and a monitoring configuration of the SSB. The sending configuration of the SSB includes, but is not limited to, at least one of the following: a center frequency point of the SSB, a subcarrier spacing of SSB, a mapping pattern of the SSB, a transmission period T1 of the transmission window, an offset offset1 of transmission window in transmission period, time domain position of SSBs in transmission window, where a mapping pattern of the SSB may include at least one of the following: the time domain position of the first subframe containing candidate SSBs for IAB node discovery (e.g. time offset $T_{offset}$ described above), mapping pattern index (e.g. in table 1 above). Where the length of the transmission window may be equal to the length of the SSB mapping pattern; The listening configuration includes but is not limited to at least one of the following: a center frequency point of monitored SSB, a subcarrier spacing of monitored SSB, and one or more listening windows. Each of the listening windows includes at least one of the following: a listening period T2 of the listening window and an offset offset2 of the listening window in listening period, a duration of the listening window, and one or more cell physical identifiers that need to be monitored in the listening window.

After receiving the sending configuration information, the IAB node determines the time-frequency resource location of the SSB transmission according to the sending configuration of the SSB, and sends SSBs to be discovered by other IAB nodes. The method of determining the time-frequency resource location of SSB transmission is that the IAB node determines the frequency domain position of the SSB transmission according to the central frequency point of the SSB in the sending configuration and the bandwidth of the SSB, and on the time domain, the first subframe of each sending configuration occasion occurs at the system frame number (SFN) and subframe meeting the following conditions:

$$SFN \bmod CEIL(T1/10) = FLOOR(offset1/10)$$

$$subframe = offset1 \bmod 10$$

Among them, T1 and offset1 are the transmission period and offset of the sending window in the transmission period, in milliseconds (ms); the mod is the modulus operation; the FLOOR is the downward rounding operation; the CEIL is the upward rounding operation.

The IAB node determines the SSB mapping pattern according to the operation frequency band and the subcarrier spacing corresponding to the frequency band (or the SSB mapping pattern is provided by the upper node), and aligns the mapping pattern with the sending window corresponding to the subcarrier spacing, and selects the required number SSBs resources used for the actual transmission of the SSBs in the sending window. That is, the number of the candidate SSB transmission resources in the transmission window are the maximum value of the actual number of SSBs resources for SSB transmission during the SSB transmission period, and some or all of the transmission resources may be selected to actually transmit the SSBs. Alternatively, the IAB node sends the SSBs in the transmission window according to the SSB mapping pattern and the time domain location of the transmission SSB in the transmission window in the sending configuration.

After the IAB node receives the listening configuration information, it listens to the SSBs sent by other nodes to discover other IAB nodes according to the listening configuration of the SSB. IAB node determines the time-frequency resource position of the listening window according to the listening configuration. In the frequency domain, IAB node determines the frequency domain position of SSBs required listening according to the central frequency point of the SSB in the listening configuration and the bandwidth of the SSB, in the time domain, the first subframe of each sending configuration occasion occurs at the system frame number (SFN) and subframe meeting the following conditions:

$$SFN \bmod CEIL(T2/10) = FLOOR(offset2/10)$$

$$subframe = offset2 \bmod 10$$

where T2 and offset2 are respectively the listening period and offset of the listening window in listening period, and the unit is millisecond (ms); mod is the modulo operation; FLOOR is the downward rounding operation; and CEIL is the upward rounding operation.

The IAB node listens to SSBs sent by other IAB nodes based on the location of the first sub-frame of the listening window and the duration of the listening window.

(3) For an IAB node, if the resources of the SSBs for the initial access of the UE and the resources of the SSBs for the IAB node overlap in the time domain, the overlapping resources cannot be used to transmit SSBs for IAB node discovery; or, if there are SSBs for the initial access of the UE to be transmitted on the overlapping resources, the SSBs for the IAB node discovery cannot be transmitted on the overlapping resources; or the SSBs for the initial access of the UE and SSBs for IAB node discovery are time-division multiplexed on the overlapping resources. In short, the SSBs for the initial access of the UE have a higher transmission priority than the SSBs for the IAB node discovery.

(4) The above embodiments and examples in the case of non-conflict can be combined with each other.

(5) In this patent document, the meaning of "SSBs for IAB node discovery," "SSBs for the discovery of the IAB node", "SSBs for IAB node cell search," "SSBs for backhaul link," and "SSBs for IAB node cell search and measurement" etc. may be the same, and may refer to the SSBs used for mutual discovery and measurement between IAB nodes. The terms "SSBs for UE initial access", "SSBs for initial access of the UE," "SSBs for UE cell search," "SSBs for access link," "SSBs for UE cell search and measurement," "SSBs for initial access of MT," and "SSBs for MT cell search" etc. may have the same meaning and may refer to the SSBs for performing cell search and measurement for the UE or the IAB node before the activation of the DU. In this patent document, the subcarrier spacing corresponds to the numerology one by one, and the same subcarrier spacing means the same numerology. In this patent document, the terms monitoring and measuring may be the same. In this patent document, the term field refers to a half frame.

Beneficial effects

The techniques described in this patent document provides a time domain mapping method for a synchronization signal block (SSB), in particular, a time domain mapping method for a candidate SSBs for a network node discovery, including: candidate SSBs are mapped with an offset relative to the half frame start position, and/or the candidate SSBs for network node discovery are mapped in the last one or more subframes of each in multiple consecutive half frames, and/or the time domain position of candidate SSBs in the time window is the same as time domain position of candidate SSB for user equipment initial access in the first K milliseconds of a half-frame, where K is the length of the time window, and smaller than or equal to five milliseconds. According to the method described in this patent document, SSBs for network node discovery and SSBs for UE initial access can be orthogonal in time domain, which solves the influence of the network node discovery on the cell search and measurement of the UE due to the half-duplex constraint.

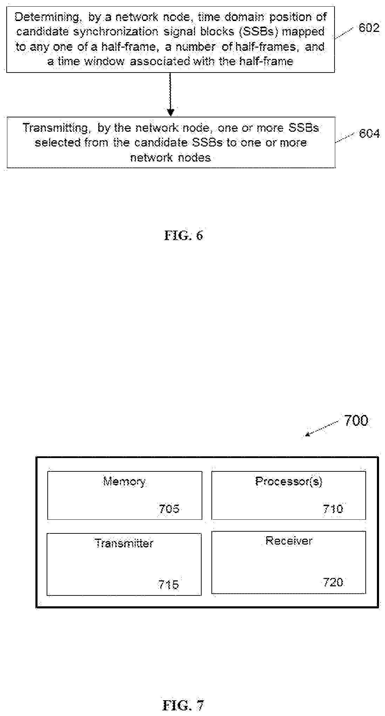

FIG. 6 shows an example flowchart of operations performed by a network node.

At the determining operation 602, a network node determines time domain position of candidate synchronization signal blocks (SSBs) mapped to any one of a half-frame, a number of half-frames, and a time window associated with the half-frame, where candidate SSBs are mapped with an offset relative to the half frame start position

At the transmitting operation 604, the network node transmits one or more SSBs selected from the candidate SSBs to one or more network nodes

In some embodiments, the time offset is predetermined or configured by a parent network node of the network node or an upper network node of the network node. An example of an upper network node includes a control unit (CU) of the donor IAB that may configure the time offset. In some embodiments, the candidate SSBs within the half frames or the time window or the number of half frames are indexed in an ascending order in time from 0 to L-1, or where the candidate SSBs within the half frames or the time window or the number of half frames are indexed in a descending order in time from L-1 to 0, where L is the maximum number of SSBs in a SSB transmission period for a frequency band. In some embodiments, the candidate SSBs are mapped to one or more sub-frames within the half-frame from an ending position of the half-frame, or a last sub-frame containing the candidate SSBs within the half-frame is the last sub-frame of the half-frame. In some embodiments, the candidate SSBs are mapped to any one of the half-frame, the number of half- frames, and the time window according to a pre-determined rule.

In some embodiments, the candidate SSBs are located in a last one or more sub-frames of each of the number of half-frames. In some embodiments, the candidate SSBs are located in a number of time segments of the number of half-frames, and a duration of each time segment is equal to an integer multiple of a slot for a subcarrier spacing. In some embodiments, the candidate SSBs are located in consecutive multiple sub-frames within a half-frame, and the number of sub-frames containing the candidate SSBs in the half-frame depends on the maximum number of SSBs in a SSB transmission period.

In some embodiments, the candidate SSBs are located in consecutive multiple half-frames, and the number of half-frames containing the candidate SSBs depends on the maximum number of SSBs in a SSB transmission period and the number of sub-frames containing the candidate SSBs in each of consecutive multiple half-frames. In some embodiments, time domain positions of the candidate SSBs in the time window is same as time domain positions of the candidate SSBs for initial access by a communication node in the first K milliseconds of a half-frame, where K is a length of the time window, and where K is less than or equal to five milliseconds.

In some embodiments, first symbol indexes for the candidate SSBs in each sub-frame or each set of slots as follows: for 15 kHz subcarrier spacing, the first symbol indexes for the candidate SSBs in each sub-frame are {2,8}; for 30 kHz subcarrier spacing, the first symbol indexes for the candidate SSBs in each sub-frame are {4,8,16,20} or {2,8,16,22}; for 120 kHz subcarrier spacing, the first symbol indexes for the candidate SSBs in each consecutive two slots aligning with one slot for subcarrier spacing 60 kHz are {4,8,16,20}; or for 240 kHz subcarrier spacing, the first symbol indexes for the candidate SSBs in each consecutive four slots aligning with one slot for subcarrier spacing 60 kHz are {8,12,16,20,32,36,40,44}. In some embodiments, the network node or a parent network node of the network node selects the one or more SSBs from the candidate SSBs for transmission.

FIG. 7 shows an exemplary block diagram of a hardware platform 700 that may be a part of a network node, such as base station or an IAB node. The hardware platform 700 includes at least one processor 710 and a memory 705 having instructions stored thereupon. The instructions upon execution by the processor 710 configure the hardware platform 700 to perform the operations described for FIGS. 1-6 and in the various embodiments described in this patent document. The transmitter 715 transmits or sends information or data to another network node. For example, a network node transmitter can SSBs to one or more network nodes during network node discovery process. The receiver 720 receives information or data transmitted or sent by another network node or a communication node (e.g., a user equipment). For example, network node can receive SSBs from other network nodes.

The following clauses are provided to describe some of the exemplary techniques in this patent document.

Clause 1 - Mapping candidate SSBs for network node discovery in at least one of a field, N consecutive fields, and a time window, where N is a positive integer.

Clause 2 - Based on clause 1, the first subframe of the candidate SSB for network node discovery in a field has a time offset $T_{offset}$ relative to start position of the field.

Clause 3 - Based on clause 1, the candidate SSBs for network node discovery in the field are mapped in subframes for which the candidate SSB for initial access of the UE is not mapped.

Clause 4 - Based on clause 1, the candidate SSBs for network node discovery are mapped in the last one or more subframes of each of the N consecutive fields;

Clause 5 - Based on clause 1, for a frequency band greater than 6 GHz, the candidate SSBs for network node discovery are mapped in K time segments of the N consecutive fields, and K is a positive integer;

Clause 6 - Based on clause 1, the candidate SSBs for network node discovery in N consecutive fields are mapped within a subframe or a time segments in which the candidate SSB for initial access of the UE is not mapped.

Clause 7 - Based on any one of clause 5 or 6, the length of each time segments is equal to an integer multiple of a slot or a slot with a specific subcarrier spacing.

Clause 8 - Based on clause 1, for different frequency bands and a given subcarrier spacing, the value of N depends on the maximum number of SSBs in the SSB transmission period for a particular frequency band, and the values of N for different frequency bands and different subcarrier spacings may be different.

Clause 9 - Based on clause 1, for different frequency bands, within a field or within N consecutive fields, the number of subframes or time slots for candidate SSB mapping for network node discovery by a specific subcarrier spacing depends on the maximum number of SSBs in SSB transmission period for a particular.

Clause 10 - Based on clause 1, the time domain location of the candidate SSB for network node discovery in the time window of length L milliseconds is the same as the time domain location of the candidate SSB for UE initial access within the first L milliseconds within the field.

The following items are also provided to describe some of the exemplary techniques in this patent document.

Item 1 - A wireless communication method, comprising transmitting, by a network node, a first transmission to one or more communication nodes during an initial access process, where the first transmission includes a first set of synchronization signal blocks (SSBs) mapped to a first set of transmission resources; and transmitting, by the network node, a second transmission to one or more network nodes during a network node discovery process, where the second transmission includes one or more SSB selected from a second set of SSBs mapped to a second set of transmission resources, where the second set of SSBs is mapped to any one of a half-frame, a number of half-frames, and a time window associated with the half-frame, and where candidate SSBs are mapped with an offset relative to the half frame start position.

Item 2 - The method of item 1, where the time offset is predetermined or configured by a parent network node of the network node or an upper network node of the network node.

Item 3A - The method of item 1, where the second set of SSBs within the half frames or the time window or the number of half frames are indexed in an ascending order in time from 0 to L-1, or indexed in a descending order in time from L-1 to 0, wherein L is the maximum number of SSBs in a SSB transmission period for a frequency band.

Item 3B - The method of claim 1, where the second set of SSBs are mapped to one or more sub-frames within the half-frame from the ending position of the half-frame; or the last sub-frame containing the candidate SSBs within the half-frame is the last sub-frame of the half-frame.

Item 4 - The method of item 1, where the second set of SSBs are mapped to any one of the half-frame, the number of half- frames, and the time window according to a pre-determined rule (e.g., as shown in FIGS. 3A to 5D).

Item 5 - The method of item 1, where the second set of SSBs are located in a last one sub-frame or in a last two more sub-frames or in a last one or more sub-frames of each of the number of half- frames.

Item 6 - The method of item 1, where the second set of SSBs are located in a number of time segments of the number of half-frames, and a duration of each time segment is equal to an integer multiple of a slot for a subcarrier spacing.

Item 7 - The method of item 1, where the second set of SSBs are located in consecutive multiple sub-frames within a half-frame, and where the number of sub-frames containing the second set of SSBs in the half-frame depends on the maximum number of SSBs in a SSB transmission period.

Item 8 - The method of item 1, where the second set of SSBs are located in consecutive multiple half-frames, and where the number of half- frames containing the second set of SSBs depends on the maximum number of SSBs in a SSB transmission period and the number of sub-frames containing the second set of SSBs in each of consecutive multiple half-frames.

Item 9 - The method of item 1, where time domain positions of the second set of SSBs in the time window is the same as time domain positions of the first set of SSBs used for initial access by a communication node in the first K milliseconds of a half-frame, where K is a length of the time window, and where K is less than or equal to five milliseconds.

Item 10 - The method of item 1, where first symbol indexes for the second set of SSBs in each sub-frame or each set of slots as follows: for 15 kHz subcarrier spacing, the first symbol indexes for the second set of SSBs in each sub-frame are {2,8}; for 30 kHz subcarrier spacing, the first symbol indexes for the second set of SSBs in each sub-frame are {4,8,16,20} or {2,8,16,22}; for 120 kHz subcarrier spacing, the first symbol indexes for the second set of SSBs in each consecutive two slots aligning with one slot for subcarrier spacing 60 kHz are {4,8,16,20}; or for 240 kHz subcarrier spacing, the first symbol indexes for the second set of SSBs in each consecutive four slots aligning with one slot for subcarrier spacing 60 kHz are {8,12,16,20,32,36,40,44}.

Item 11 - The method of item 1, where the network node or a parent network node of the network node selects the one or more SSBs from the second set of SSBs for transmission.

In this document the term "exemplary" is used to mean "an example of" and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

**Claims**

1. A wireless communication method, comprising:

determining, by a network node, time domain position of candidate synchronization signal blocks, SSB, mapped to any one of a half-frame, a number of half-frames, and a time window associated with the half-frame, wherein the candidate SSBs are mapped with an offset relative to the half frame start position; and

transmitting, by the network node, one or more SSBs selected from the candidate SSBs to one or more network nodes;

wherein some candidate SSBs are candidate SSBs for IAB node discovery and the offset is pre-determined to be orthogonal to the SSBs for UE initial access.

2. The method of claim 1, wherein the time offset is predetermined or configured by a parent network node of the network node or an upper network node of the network node.

3. The method of claim 1,

wherein the candidate SSBs within the half frames or the time window or the number of half frames are indexed in an ascending order in time from 0 to L-1, or

wherein the candidate SSBs within the half frames or the time window or the number of half frames are indexed in a descending order in time from L-1 to 0,

wherein L is the maximum number of SSBs in a SSB transmission period for a frequency band.

4. The method of claim 1,

wherein the candidate SSBs are mapped to one or more sub-frames within the half-frame from an ending position of the half-frame, or

wherein a last sub-frame containing the candidate SSBs within the half-frame is the last sub-frame of the half-frame.

5. The method of claim 1, wherein the candidate SSBs are mapped to any one of the half-frame, the number of half-frames, and the time window according to a pre-determined rule.

6. The method of claim 1, wherein the candidate SSBs are located in a last one or more sub-frames of each of the number of half-frames.

7. The method of claim 1, wherein the candidate SSBs are located in a number of time segments of the number of half-frames, and a duration of each time segment is equal to an integer multiple of a slot for a subcarrier spacing.

8. The method of claim 1,

wherein the candidate SSBs are located in consecutive multiple sub-frames within a half-frame, and

wherein a number of sub-frames containing the candidate SSBs in the half-frame depends on a maximum number of SSBs in a SSB transmission period.

9. The method of claim 1,

wherein the candidate SSBs are located in consecutive multiple half-frames, and

wherein the number of half-frames containing the candidate SSBs depends on a maximum number of SSBs in a SSB transmission period and a number of sub-frames containing the candidate SSBs in each of consecutive multiple half-frames.

10. The method of claim 1,

wherein time domain positions of the candidate SSBs in the time window is same as time domain positions of the candidate SSBs for initial access by a communication node in the first K milliseconds of a half-frame,

wherein K is a length of the time window, and

wherein K is less than or equal to five milliseconds.

11. The method of claim 1, wherein first symbol indexes for the candidate SSBs in each sub-frame or each set of slots as follows:

for 15 kHz subcarrier spacing, the first symbol indexes for the candidate SSBs in each sub-frame are {2,8};
for 30 kHz subcarrier spacing, the first symbol indexes for the candidate SSBs in each sub-frame are {4,8,16,20} or {2,8,16,22};
for 120 kHz subcarrier spacing, the first symbol indexes for the candidate SSBs in each consecutive two slots aligning with one slot for subcarrier spacing 60 kHz are {4,8,16,20}; or
for 240 kHz subcarrier spacing, the first symbol indexes for the candidate SSBs in each consecutive four slots aligning with one slot for subcarrier spacing 60 kHz are {8,12,16,20,32,36,40,44}.

12. The method of claim 1, wherein the network node or a parent network node of the network node selects the one or more SSBs from the candidate SSBs for transmission.

13. An apparatus for wireless communication, comprising a memory and a processor,
wherein the processor reads code from the memory and implements a method recited in any of claims 1 to 12.

14. A computer readable program storage medium having code stored thereon, the code, when executed by a processor, causing the processor to implement a method recited in any of claims 1 to 12.

**Patentansprüche**

1. Drahtloses Kommunikationsverfahren, das aufweist:

Bestimmen, durch einen Netzwerkknoten, der Zeitbereichsposition von Kandidaten-Synchronisationssignalblöcken, SSB, die auf irgendeinem eines Halbrahmens, einer Anzahl von Halbrahmen und eines mit dem Halbrahmen assoziierten Zeitfensters abgebildet werden,
wobei die Kandidaten-SSBs mit einem Versatz relativ zu der Halbrahmen-Startposition abgebildet werden; und
Übertragen eines oder mehrerer SSBs, die aus den Kandidaten-SSBs ausgewählt sind, durch den Netzwerkknoten an einen oder mehrere Netzwerkknoten;
wobei einige Kandidaten-SSBs Kandidaten-SSBs für die IAB-Knotenermittlung sind und der Versatz so vorbestimmt wird, dass er orthogonal zu den SSBs zum anfänglichen UE-Zugang ist.

2. Verfahren nach Anspruch 1, wobei der Zeitversatz von einem Stamm-Netzwerkknoten des Netzwerkknotens oder einem oberen Netzwerkknoten des Netzwerkknotens vorgegeben oder konfiguriert wird.

3. Verfahren nach Anspruch 1,

wobei die Kandidaten-SSBs innerhalb der Halbrahmen oder des Zeitfensters oder der Anzahl der Halbrahmen in einer aufsteigenden zeitlichen Reihenfolge von 0 bis L-1 indiziert werden, oder
wobei die SSB-Kandidaten innerhalb der Halbrahmen oder des Zeitfensters oder der Anzahl der Halbrahmen in einer absteigenden zeitlichen Reihenfolge von L-1 bis 0 indiziert werden,
wobei L die maximale Anzahl von SSBs in einer SSB-Übertragungsperiode für ein Frequenzband ist.

4. Verfahren nach Anspruch 1,

wobei die SSB-Kandidaten auf einen oder mehrere Subrahmen innerhalb des Halbrahmens von einer Endposition des Halbrahmens abgebildet werden, oder
wobei ein letzter Subrahmen, der die SSB-Kandidaten innerhalb des Halbrahmens enthält, der letzte Subrahmen des Halbrahmens ist.

5. Verfahren nach Anspruch 1, wobei die Kandidaten-SSBs gemäß einer vorbestimmten Regel auf irgendeinen des Halbrahmens, der Anzahl von Halbrahmen oder des Zeitfensters abgebildet werden.

6. Verfahren nach Anspruch 1, wobei sich die SSB-Kandidaten in einem oder mehreren der letzten Subrahmen jedes der Anzahl der Halbrahmen befinden.

7. Verfahren nach Anspruch 1, wobei sich die SSB-Kandidaten in einer Anzahl von Zeitsegmenten der Anzahl von Halbrahmen befinden und eine Dauer jedes Zeitsegments gleich einem ganzzahligen Vielfachen eines Schlitzes für einen Unterträgerabstand ist.

**8.** Verfahren nach Anspruch 1,

wobei sich die SSB-Kandidaten in aufeinanderfolgenden mehreren Subrahmen innerhalb eines Halbrahmens befinden, und

wobei eine Anzahl von Subrahmen, die die Kandidaten-SSBs in dem Halbrahmen enthalten, von einer maximalen Anzahl von SSBs in einer SSB-Übertragungsperiode abhängt.

**9.** Verfahren nach Anspruch 1,

wobei sich die SSB-Kandidaten in aufeinanderfolgenden mehreren Halbrahmen befinden, und
wobei die Anzahl der Halbrahmen, die die Kandidaten-SSBs enthalten, von einer maximalen Anzahl von SSBs in einer SSB-Übertragungsperiode und einer Anzahl von Subrahmen abhängt, die die Kandidaten-SSBs in jedem der aufeinanderfolgenden mehreren Halbrahmen enthalten.

**10.** Verfahren nach Anspruch 1,

wobei die Zeitbereichspositionen der Kandidaten-SSBs in dem Zeitfenster die gleichen sind wie die Zeitbereichspositionen der Kandidaten-SSBs für den anfänglichen Zugang durch einen Kommunikationsknoten in den ersten K Millisekunden eines Halbrahmens,
wobei K eine Länge des Zeitfensters ist, und
wobei K kleiner als oder gleich fünf Millisekunden ist.

**11.** Verfahren nach Anspruch 1, wobei erste Symbolindizes für die SSB-Kandidaten in jedem Subrahmen oder jedem Satz von Schlitzen wie folgt sind:

für einen 15 kHz-Unterträgerabstand sind die ersten Symbolindizes für die SSB-Kandidaten in jedem Subrahmen {2,8};
für einen 30 kHz-Unterträgerabstand sind die ersten Symbolindizes für die SSB-Kandidaten in jedem Subrahmen {4,8,16,20} oder {2,8,16,22};
für einen 120 kHz-Unterträgerabstand sind die ersten Symbolindizes für die SSB-Kandidaten in jeweils zwei aufeinanderfolgenden Schlitzen, die mit einem Schlitz für einen Unterträgerabstand von 60 kHz ausgerichtet sind, {4,8,16,20}; oder
für einen 240 kHz-Unterträgerabstand sind die ersten Symbolindizes für die SSB-Kandidaten in jeweils vier aufeinanderfolgenden Schlitzen, die mit einem Schlitz für einen Unterträgerabstand von 60 kHz ausgerichtet sind, {8,12,16,20,32,36,40,44}.

**12.** Verfahren nach Anspruch 1, wobei der Netzwerkknoten oder ein Stamm-Netzwerkknoten des Netzwerkknotens den einen oder die mehreren SSBs aus den Kandidaten-SSBs zur Übertragung auswählt.

**13.** Vorrichtung zur drahtlosen Kommunikation, die einen Speicher und einen Prozessor aufweist, wobei der Prozessor einen Code aus dem Speicher liest und ein Verfahren nach einem der Ansprüche 1 bis 12 implementiert.

**14.** Computerlesbares Programmspeichermedium mit darauf gespeichertem Code, wobei der Code, wenn er von einem Prozessor ausgeführt wird, den Prozessor veranlasst, ein Verfahren nach einem der Ansprüche 1 bis 12 zu implementieren.

**Revendications**

**1.** Procédé de communication sans fil, comprenant :

la détermination, par un nœud de réseau, de la position dans le domaine temporel de blocs de signaux de synchronisation candidats, SSB, mappés à un élément quelconque parmi une demi-trame, plusieurs demi-trames, ou une fenêtre temporelle associée à la demi-trame,
les SSB candidats étant mappés avec un décalage par rapport à la position de début de demi-trame ; et
la transmission, par le nœud de réseau, d'un ou de plusieurs SSB sélectionnés parmi les SSB candidats à un ou plusieurs nœuds de réseau ;
où certains SSB candidats sont des SSB candidats pour une découverte de nœuds IAB et le décalage est prédéterminé de manière à être orthogonal aux SSB pour un accès initial à l'UE.

2. Procédé selon la revendication 1, où le décalage temporel est prédéterminé ou configuré par un nœud de réseau parent du nœud de réseau ou un nœud de réseau supérieur au nœud de réseau.

3. Procédé selon la revendication 1,

où les SSB candidats dans les demi-trames, la fenêtre temporelle ou les plusieurs demi-trames sont indexés suivant un ordre temporel croissant de 0 à L-1, ou
où les SSB candidats dans les demi-trames, la fenêtre temporelle ou les plusieurs demi-trames sont indexés suivant un ordre temporel décroissant de L-1 à 0,
L étant le nombre maximal de SSB pendant une période de transmission SSB pour une bande de fréquences.

4. Procédé selon la revendication 1,

où les SSB candidats sont mappés à une ou plusieurs sous-trames à l'intérieur de la demi-trame à partir d'une position finale de la demi-trame, ou
où une dernière sous-trame contenant les SSB candidats à l'intérieur de la demi-trame est la dernière sous-trame de la demi-trame.

5. Procédé selon la revendication 1, où les SSB candidats sont mappés à un élément quelconque parmi les demi-trames, les plusieurs demi-trames et la fenêtre temporelle conformément à une règle prédéterminée.

6. Procédé selon la revendication 1, où les SSB candidats sont situés dans une ou plusieurs dernières sous-trames de chacune des plusieurs demi-trames.

7. Procédé selon la revendication 1, où les SSB candidats sont situés dans un plusieurs segments temporels des plusieurs demi-trames, et la durée de chaque segment temporel est égale à un multiple entier d'un créneau pour un espacement de sous-porteuses.

8. Procédé selon la revendication 1,

où les SSB candidats sont situés dans des sous-trames multiples consécutives à l'intérieur d'une demi-trame, et
où le nombre de sous-trames contenant les SSB candidats dans la demi-trame dépend d'un nombre maximal de SSB pendant une période de transmission de SSB.

9. Procédé selon la revendication 1,

où les SSB candidats sont situés dans de multiples demi-trames consécutives, et
où le nombre de demi-trames contenant les SSB candidats dépend d'un nombre maximal de SSB pendant une période de transmission SSB et d'un nombre de sous-trames contenant les SSB candidats dans chacune des multiples demi-trames consécutives.

10. Procédé selon la revendication 1,

où les positions dans le domaine temporel des SSB candidats dans la fenêtre temporelle sont les mêmes que les positions dans le domaine temporel des SSB candidats pour un accès initial par un nœud de communication dans les K premières millisecondes d'une demi-trame,
K étant la longueur de la fenêtre temporelle, et
K étant inférieur ou égal à cinq millisecondes.

11. Procédé selon la revendication 1, où les premiers indices de symbole pour les SSB candidats dans chaque sous-trame ou chaque ensemble de créneaux sont les suivants :

pour un espacement de sous-porteuses de 15 kHz, les premiers indices de symbole pour les SSB candidats dans chaque sous-trame sont {2,8} ;
pour un espacement de sous-porteuses de 30 kHz, les premiers indices de symbole pour les SSB candidats dans chaque sous-trame sont {4,8,16,20} ou {2,8,16,22} ;

pour un espacement de sous-porteuses de 120 kHz, les premiers indices de symbole pour les SSB candidats tous les deux créneaux consécutifs alignés avec un créneau pour un espacement de sous-porteuses de 60 kHz sont {4,8,16,20} ; ou

pour un espacement de sous-porteuses de 240 kHz, les indices des premiers symboles pour les SSB candidats tous les quatre créneaux consécutifs alignés avec un créneau pour un espacement de sous-porteuses de 60 kHz sont {8,12,16,20,32,36,40,44}.

12. Procédé selon la revendication 1, où le nœud de réseau ou un nœud de réseau parent du nœud de réseau sélectionne un ou plusieurs SSB parmi les SSB candidats pour la transmission.

13. Appareil de communication sans fil, comprenant une mémoire et un processeur, où le processeur extrait un code de la mémoire et met en œuvre un procédé selon l'une des revendications 1 à 12.

14. Support de stockage de programme lisible par ordinateur, sur lequel est enregistré un code dont l'exécution par un processeur entraîne la mise en œuvre par ledit processeur d'un procédé selon l'une des revendications 1 à 12.

FIG. 1

FIG. 2A

FIG. 2B

FIG. 2C

FIG. 2D

FIG. 2E

FIG. 3A

FIG. 3B

2 slots corresponding to the 120 kHz subcarrier spacing where the candidate SSBs for IAB node discovery are located

FIG. 3C

2 time slots with a corresponding subcarrier spacing of 120kHz for the candidate SSB for IAB node discovery (that is, 4 time slots corresponding to the subcarrier spacing of 240kHz)

FIG. 3D

28

FIG. 3E

FIG. 4A

FIG. 4B

For 15kHz subcarrier spacing, the sub-frame of the candidate SSB used for the discovery of the IAB node

For a 30 kHz subcarrier spacing, the subframe in which the candidate SSB for IAB node discovery is located (2 slots of 30 kHz subcarrier spacing)

FIG. 4C

Subframe in which the candidate SSB for IAB node discovery is located

FIG. 4D

FIG. 4E

FIG. 5A

FIG. 5B

FIG. 5C

FIG. 5D

Determining, by a network node, time domain position of candidate synchronization signal blocks (SSBs) mapped to any one of a half-frame, a number of half-frames, and a time window associated with the half-frame — 602

Transmitting, by the network node, one or more SSBs selected from the candidate SSBs to one or more network nodes — 604

**FIG. 6**

700

| Memory | Processor(s) |
|---|---|
| 705 | 710 |
| Transmitter | Receiver |
| 715 | 720 |

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018262308 A1